# EUROPÄISCHE PATENTSCHRIFT

(11) **EP 0 716 025 B1**
(45) Veröffentlichungstag und Bekanntmachung des Hinweises auf die Patenterteilung: **04.03.1998**
(21) Anmeldenummer: 95118904.2
(22) Anmeldetag: 01.12.1995
(51) Int. Cl.: B65D 1/48

(54) **Kleinladungsträger**
Small goods carrier
Petite boîte de transport

(30) Priorität: 09.12.1994 DE 9419764 U
(43) Veröffentlichungstag der Anmeldung: 12.06.1996
(73) Patentinhaber: DSM RESINS B.V., 8022 AW Zwolle (NL)
(72) Erfinder: Eckel, Ägidius, Dr., D-67150 Niederkirchen (DE); Zwecker, Joachim, Dr., D-69469 Weinheim (DE); Buhl, Dieter, D-67227 Frankenthal (DE)
(74) Vertreter: den Hartog, Jeroen Hendrikus Joseph

(56) Entgegenhaltungen:
- EP-A- 0 460 855
- DATABASE WPI Section Ch, Week 8128 Derwent Publications Ltd., London, GB; Class A23, AN 81-50403D & JP-A-56 058 826 ( MITSUBISHI PETROCH KK) , 22.Mai 1981
- DATABASE WPI Section Ch, Week 9244 Derwent Publications Ltd., London, GB; Class A32, AN 92-362672 & JP-A-04 265 717 ( SEKISUI CHEM IND CO LTD) , 21.September 1992
- DATABASE WPI Section Ch, Week 9515 Derwent Publications Ltd., London, GB; Class A23, AN 95-109994 & JP-A-07 032 392 ( YAMATO KAKO KK) , 3.Februar 1995
- DATABASE WPI Section Ch, Week 9138 Derwent Publications Ltd., London, GB; Class A93, AN 91-278259

## Beschreibung

Die Erfindung betrifft Kleinladungsträger für den Transport und die Lagerung gewerblicher Güter, beispielsweise von Maschinenteilen, Elektroteilen, Automobilteilen, aber auch Lebensmitteln, Getränkeflaschen oder Dosen. Insbesondere betrifft sie Kleinladungsträger, wie sie in DIN 30 820 und in der VDA-Empfehlung 4500 spezifiziert sind.
Kleinladungsträger wurden bisher vor allem aus Polyethylen oder Polypropylen gefertigt, deren Brandverhalten für viele Anwendungszwecke aber nicht ausreichend ist.
Die 'Derwent WPI Zusammenfassung' von JP-A-56058826 beschreibt ein Laminat aus einem Schaumstoff-Kern und Deckschichten aus SMC (sheet molding compound) auf Basis von ungesättigten Polyesterharzen, welches u.a. für Behälter verwendet werden kann. Ein aus diesem Laminat gefertigten Behälter ist aber nicht flammfest.
Diese Aufgabe wird dadurch durch die kennzeichnenden Merkmale des Anspruchs gelöst.
Es hat sich nun erwiesen, daß Kleinladungsträger aus gehärteten glasfaserverstärkten und füllstoffhaltigen SMC- oder BMC-Formmassen auf Basis von ungesättigten Polyesterharzen und Aluminiumoxidtrihydrat ein wesentlich günstigeres Brandverhalten aufweisen, wobei die mechanischen Eigenschaften, wie Stabilität, Festigkeit und Steifigkeit hervorragend sind.
Kleinladungsträger bestehen im allgemeinen aus einer Bodenplatte und Seitenwänden, die geschlossen oder durchbrochen oder auch in Form von Stegen oder Versteifungsrippen ausgebildet sein können. In dieses kastenförmige Gebilde wird das Transportgut hineinge-stellt.

In manchen Fällen kann der Kleinladungsträger auch mit einer Deckplatte abgedeckt sein. Ferner können Traghilfen, wie z.B. Haltegriffe angebracht sein. Der Kleinladungsträger besteht im wesentlichen aus dem gehärteten ungesättigten Polyesterharz, wobei nicht ausgeschlossen werden soll, daß Teilelemente auch aus anderen Materialien, wie z.B. Metall sind.

Ungesättigte Polyesterharze sind Lösungen von ungesättigten Polyestern in copolymerisierbaren Monomeren, vorzugsweise in Styrol. Als ungesättigte Polyester eignen sich die üblichen Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzlich Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß. Bevorzugte ungesättigte Polyester sind solche auf Basis von Maleinsäureanhydrid und ortho-Phthalsäure einerseits und Propylenglykol und/oder Dipropylenglykol andererseits.

Die ungesättigten Polyesterharze enthalten im allgemeinen einen Thermoplasten, wie Polystyrol, Polymethylmethacrylat, gesättigte Polyester oder Polyvinylacetat als Antischrumpfkomponente, ein Erdalkalihydroxid oder -oxid als Eindickmittel, Zinkstearat oder
Calciumstearat als Schmiermittel sowie Füllstoffe, wobei die ungesättigten Polyesterharze, neben Kreide, Aluminiumoxidtrihydrat Al₂O₃.3H₂O in Mengen von 30 bis 80, vorzugsweise 40 bis 70 Gew.-%, enthalten. Ferner enthalten die Harze übliche Inhibitoren und Peroxidkatalysatoren, welche die Härtung auslösen. Als Verstärkungsmittel dienen Glasfasern in Mengen von 5 bis 40 Gew.-%.

Das ungesättigte Polyesterharz soll zur Herstellung der erfindungsgemäßen Kleinladungsträger entweder als SMC- oder als BMC-Masse vorliegen. SMC (sheet molding compound)-Massen sind flächige Halbzeuge aus glasfaserverstärkten, gefüllten Polyesterharzen, die in einer Presse verformt und gehärtet werden. BMC (bulk molding compound)-Massen sind mit Füllstoffen und Kurzfasern verstärkte Polyesterharze, die durch Spritzguß verarbeitet werden. Zur Herstellung solcher Massen wird das Harz mit der Antischrumpfkomponente, Glasfasern, Füllstoffen, dem Katalysator und dem Eindickmittel abgemischt und eingedickt. Herstellung und Verarbeitung solcher Massen ist z.B. in "Sheet Molding compounds, Science and Technology", Dr.H.G. Kia, Hansa Verlag, beschrieben.

Diese Massen werden bei Temperaturen von 120° bis 180°C in geeigneten Werkzeugen verpreßt (bei SMC-Massen) bzw. spritzgegossen (bei BMC-Massen) und dabei gehärtet.

Die erfindungsgemäßen Kleinladungsträger zeichnen sich durch hervorragende mechanische Eigenschaften und durch ein gutes Brandverhalten aus.

Die in den Beispielen genannten Teile beziehen sich auf das Gewicht.

### Beispiele für Rezepturen

### 1. SMC-Formulierung

- 70 Teile: ungesättigtes Polyesterharz auf Basis ortho-Phthalsäure (PALAPREG P 17-02 BASF)
- 30 Teile: styrolische Lösung von Polystyrol (PALAPREG H 814-01 BASF)
- 300 Teile: Aluminiumoxidtrihydrat (ON 921 Fa. Martinswerke)
- 4,5 Teile: Zinkstearat (Zincum 5, Fa. Barlocher)
- 1,5 Teile: Tert.butyl-perbenzoat (Peroxidchemie)
- 2,5 Teile: Magnesiumoxid-Paste (MK 35, Fa. Lehmann + Voss)
- 2,0 Teile: Viskositätsverminderer (W 996, Fa. Byk)
- 100 Teile: Glasfasern der Länge 12-25 mm (P 204, Fa. Vetrotex).

### 2. BMC-Formulierung

- 80 Teile: UP-Harz (PALAPREG P 17-02)
- 20 Teile: Polystyrol-Lösung (PALAPREG H 814-01)
- 350 Teile: Aluminiumoxidtrihydrat
- 4,5 Teile: Zinkstearat
- 1,5 Teile: Tert.butylperbenzoat
- 100 Teile: Glasfasern 12-25 mm lang.

## Patentansprüche

1. Kleinladungsträger für den Transport und die Lagerung gewerblicher Güter, dadurch gekennzeichnet, daß sie aus gehärteten glasfaserverstärkten und füllstoffhaltigen SMC- oder BMC-Formmassen bestehen, die ungesättigte Polyesterharze, 5 bis 40 Gew.-% Glasfasern und 30 bis 80 Gew.-% Aluminiumoxidtrihydrat enthalten, wobei die Kleinladungsträger gegebenenfalls Teilelemente aus Metall enthalten und mit Trägerhilfen und Deckplatten ausgerüstet sein können.

## Claims

1. Small goods carriers for transporting and storing commercial goods, characterised in that they consist of cured glass- fibre reinforced sheet moulding or bulk moulding compounds containing fillers and comprising unsaturated polyester resins, 5 to 40% by weight glass fibres and 30 to 80% by weight aluminium oxide trihydrate, wherein the small goods carriers may comprise sub-components of metal and be provided with carrying aids and top panels.

## Revendications

1. Petites boîtes de transport pour le transport et l'emmagasinage de biens industriels, caractérisées en ce qu'elles se composent de matières moulables durcies de SMC ou de BMC contenant une matière de remplissage et renforcées par des fibres de verre, qui contiennent des résines de polyester insaturées, 5 à 40 % en masse de fibres de verre et 30 à 80 % en masse d'oxyde d'aluminium trihydraté, les petites boîtes de transport comportant le cas échéant des composantes de métal et pouvant être dotées d'aides au transport et de plaques de couverture.
